# EUROPÄISCHE PATENTSCHRIFT

(11) **EP 1 702 748 B1**
(45) Veröffentlichungstag und Bekanntmachung des Hinweises auf die Patenterteilung: **25.04.2007**
(21) Anmeldenummer: 06004789.1
(22) Anmeldetag: 09.03.2006
(51) Int. Cl.: B32B 7/02, B32B 15/04, B65D 65/40

(54) **Verpackungsmaterial in Form eines Folienzuschnitts**
Package in the form of a blank
Flan pour emballages

(30) Priorität: 17.03.2005 DE 202005004347 U
(43) Veröffentlichungstag der Anmeldung: 20.09.2006
(73) Patentinhaber: Hueck Folien GmbH & Co. KG, 92712 Pirk (DE)
(72) Erfinder: Weber, Bernd, 92637 Weiden (DE); Pöllmann, Karl, Dr., 99198 Erfurt (DE)
(74) Vertreter: Schneck, Herbert

(56) Entgegenhaltungen:
- EP-A- 1 147 912
- EP-A- 1 305 167

## Beschreibung

Die Erfindung richtet sich auf ein Verpackungsmaterial in Form eines Folienzuschnitts, insbesondere auf eine Abdeckung für einen Behälter aus Kunststoff und/oder Folie. Die Erfindung kann aber auch bei Etiketten, Beuteln, Blisterverpackungen oder dergleichen Anwendung finden. Das erfindungsgemäße Verpackungsmaterial ist insbesondere für den Lebensmittelbereich vorgesehen.

Oftmals ist es erwünscht, dass Verpackungsmaterial für Konsumgüter ein Druckbild mit Matt- und Brillant-Effekt aufweist. Diese Verpackungsmaterialien sind optisch besonders ansprechend und wirken äußerst hochwertig. Beispielsweise ist aus der EP 1 305 167 B1 ein Verpackungsmaterial bekannt, das eine Aluminiumfolie bzw. einen Aluminiumfolienverbund aufweist. Auf dieser/diesem ist ein diffuses und dadurch mattes Druckbild aufgebracht, wobei gewisse Bereiche des Druckbilds ausgespart sind. In diesen ausgesparten Bereichen tritt ein Brillant-Effekt auf. Gemäß der EP 1 305 167 B1 wird also ein "Negativbild" mit Matt-Effekt auf eine glänzende Oberfläche gedruckt.

Der Erfindung liegt die Aufgabe zugrunde, ein weiteres Verpackungsmaterial zu schaffen, das aufgrund eines Matt-Glanz-Effektes optisch äußerst ansprechend ist. Außerdem soll das Druckbild besonders auffallend sein.

Diese Aufgabe wird erfindungsgemäß dadurch gelöst, dass das Verpackungsmaterial umfasst
- eine Trägerschicht, die eine nach innen gewandte und eine nach außen gewandte Stirnfläche aufweist, wobei die Trägerschicht zumindest im Bereich der nach außen gewandten Stirnfläche metallisch reflektierend ist,
- eine matte Deckschicht, die über der nach außen gewandten Stirnfläche der Trägerschicht liegt und mindestens eine Aussparung zum Licht-Durchlass aufweist, und
- eine Druckschicht, die die mindestens eine Aussparung zumindest teilweise ausfüllt und zumindest im Bereich der mindestens einen Aussparung zumindest stellenweise transparent ist, so dass auf die Druckschicht einfallendes Licht von der Trägerschicht reflektiert werden kann.

Es sind also eine deckende Schicht und eine Druckschicht vorgesehen, unter welchen sich eine Licht-reflektierende Trägerschicht befindet. Die Druckschicht ist dabei zumindest im Bereich der mindestens einen Aussparung zumindest stellenweise entweder teilweise oder vollständig lichtdurchlässig. Auf das Verpackungsmaterial einfallendes Licht kann somit an bestimmten Stellen von der Trägerschicht reflektiert werden, wodurch ein Brillant-Effekt bzw. Glanz-Effekt erzeugt wird. Ansonsten tritt ein Matt-Effekt auf.

Vorzugsweise besteht die Trägerschicht aus Aluminium. Gemäß einer anderen vorteilhaften Ausgestaltung ist die Trägerschicht ein Verbundmaterial mit einer metallisierten Oberschicht. Das Verbundmaterial kann metallisierte Kunststofffolien umfassen. Die aufgeführten Materialien eignen sich bestens als Verpackungsmaterial und weisen außerdem äußerst gute Licht-Reflexionseigenschaften auf.

Es ist zweckmäßig, dass zwischen der Trägerschicht und der matten Deckschicht eine Vorlack-Schicht vorgesehen ist. Hierdurch wird eine besonders gute Verbindung zwischen der matten Deckschicht und der Trägerschicht sichergestellt.

Eine bevorzugte Ausführungsform zeichnet sich dadurch aus, dass die Druckschicht die mindestens eine Aussparung flächenmäßig vollständig ausfüllt. Vorteilhafterweise ist die Druckschicht auf die matte Deckschicht aufgebracht.

Es ist zweckmäßig, dass die Druckschicht nur im Bereich der mindestens einen Aussparung gebildet ist. Dies wirkt sich positiv auf den Matt-Glanz-Effekt des Verpackungsmaterials aus. Außerdem ist hier der Materialaufwand auf ein Minimum reduziert.

Gemäß einer anderen vorteilhaften Ausgestaltung liegt mindestens stellenweise ein freier Zwischenraum zwischen der matten Deckschicht und der Druckschicht vor. Hierdurch kann der optische Effekt noch verstärkt werden. Der Lichtgang gelangt im Wesentlichen ungestört zu der Trägerschicht.

Gemäß einer zweckmäßigen Ausführungsform steht die Druckschicht gegenüber der matten Deckschicht vor. Gemäß einer anderen bevorzugten Ausführungsform steht dagegen die matte Deckschicht gegenüber der Druckschicht vor. Die matte Deckschicht und die Druckschicht können aber auch eine identische Höhe aufweisen.

Zweckmäßigerweise weist die Druckschicht mindestens ein Druckmotiv auf. Unter Druckmotiven werden hier Darstellungen jeglicher Art verstanden. Beispielsweise können einzelne Buchstaben, Wörter oder beliebige Abbildungen vorgesehen sein.

Vorzugsweise befindet sich die mindestens eine Aussparung der matten Deckschicht im Bereich des mindestens einen Druckmotivs. Diese Ausgestaltung bewirkt, dass das Druckmotiv bei entsprechendem Lichteinfall besonders hervorgehoben wird und dem Betrachter bzw. Konsumenten sofort ins Auge springt. Hierdurch können äußerst plastisch wirkende Druckmotive erzeugt werden.

Gemäß einer vorteilhaften Ausbildung befindet sich die mindestens eine Aussparung der matten Deckschicht direkt unter dem Druckmotiv. Hier tritt der Glanz-Effekt also in dem Druckmotiv auf. Gemäß einer weiteren zweckmäßigen Ausgestaltung umläuft die mindestens eine Aussparung der matten Deckschicht mindestens teilweise das Druckmotiv. Der Glanz-Effekt liegt folglich am Rand des Druckmotivs vor. Durch beide Ausgestaltungen können besonders greifbar wirkende Druckmotive geschaffen werden.

Es ist von großem Vorteil, wenn die matte Deckschicht aus mattem Deckweiß besteht. Durch die matte Deckweißschicht kann ein besonders farbstarkes Druckbild hervorgebracht werden.

Nachfolgend wird die Erfindung anhand bevorzugter Ausführungsbeispiele in Verbindung mit der Zeichnung näher beschrieben. Dabei zeigen:
- Fig. 1: einen Querschnitt durch ein erfindungsgemäßes Verpackungsmaterial gemäß einer ersten Ausführungsform, wobei die einzelnen Schichten nicht im realen Dicken-Verhältnis zueinander dargestellt sind,
- Fig. 2: eine Aufsicht auf eine Behälter-Abdeckung, die aus dem erfindungsgemäßen Verpackungsmaterial hergestellt ist,
- Fig. 3: einen Querschnitt durch ein erfindungsgemäßes Verpackungsmaterial gemäß einer weiteren Ausführungsform, wobei die einzelnen Schichten wieder nicht im realen Dicken-Verhältnis zueinander dargestellt sind, und
- Fig. 4: einen Querschnitt durch ein erfindungsgemäßes Verpackungsmaterial gemäß einer weiteren Ausführungsform, wobei auch hier die einzelnen Schichten nicht im realen Dicken-Verhältnis zueinander dargestellt sind.

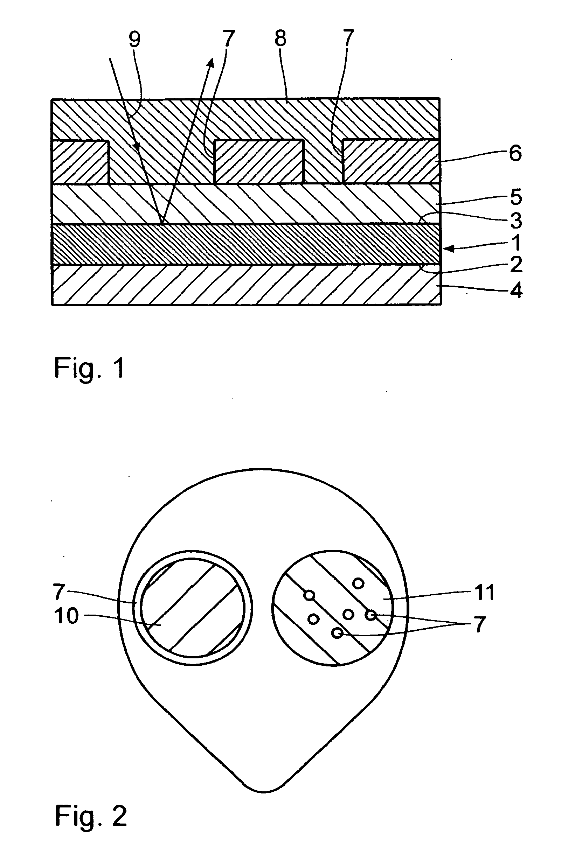

Bei dem ersten Ausführungsbeispiel gemäß Fig. 1 findet eine 38 µm starke, ungeprägte Aluminiumfolie 1 als Trägerschicht Anwendung, die eine nach innen gewandte Stirnfläche 2 und eine nach außen gewandte Stirnfläche 3 aufweist. Unter der inneren Stirnfläche 2 wird die Seite verstanden, die dem entsprechenden, zu verpackenden Produkt zugewandt ist. Sie könnte auch als untere Stirnfläche bezeichnet werden. Die innere Stirnfläche 2 ist hier die Glanzseite der Aluminiumfolie 1. Die äußere Stirnfläche 3 ist folglich dem zu verpackenden Produkt abgewandt und dementsprechend einem Konsumenten/Betrachter zugewandt. Die äußere Stirnfläche 3 könnte daher auch als obere Stirnfläche angegeben werden und ist hier die Mattseite der Aluminiumfolie 1.

Eine Heisssiegelschicht 4 ist flächig auf die innere Stirnfläche 2 der Aluminiumfolie 1 aufgebracht, um das Verpackungsmaterial an seinem Bestimmungsort festlegen zu können.

Auf die äußere Stirnfläche 3 der Aluminiumfolie 1 ist eine Vorlack-Schicht 5 flächig aufgetragen, auf welcher sich wiederum eine matte, deckende Deckschicht 6 befindet. Die Vorlack-Schicht 5 sorgt für eine gut haltende Verbindung zwischen der Deckschicht 6 und der Aluminiumfolie 1. Sie ist entweder voll- oder teil-transparent. Die Vorlack-Schicht 5 ist nicht zwingend erforderlich. Die Deckschicht 6 kann auch direkt auf die Aluminiumfolie 1 aufgebracht sein.

Die matte Deckschicht 6 besteht aus mattem Deckweiß. Sie kann aber auch durch eine andere deckende Farbe oder durch Mattlack gebildet sein. An einigen Stellen, also partiell, ist sie ausgespart. Sie weist demgemäß Aussparungen 7 in beliebiger Gestalt auf, die von oben nach unten bzw. von unten nach oben vollständig durch die matte Deckschicht 6 laufen. Im Wesentlichen ist die Deckschicht 6 lichtundurchlässig.

Auf die matte Deckschicht 6 ist eine Druckschicht 8 aufgebracht. Zur Aufbringung eignen sich alle bekannten Druckverfahren, wie z.B. Tief-, Flexo-, Digital- oder Offset-Druck. Die Druckschicht 8 weist mindestens ein hervorzuhebendes Druckmotiv auf, worauf später noch detaillierter eingegangen wird. Die Aussparungen 7 befinden sich im Bereich dieses Druckmotivs, d.h. unter diesem Druckmotiv. Sie gewähren eine partielle Verbindung der Druckschicht 8 mit der Vorlack-Schicht 5. Die Druckschicht 8 ist also im Bereich der Aussparungen 7 quasi direkt auf die Vorlack-Schicht 5 gedruckt. Die Druckschicht 8 füllt dabei die Aussparungen 7 sowohl in der Höhe als auch in der Fläche vollständig aus. Im Bereich der Aussparungen 7 ist mindestens ein Teil der Druckschicht 8 vollständig transparent und/oder lasierend. Ansonsten kann das Druckmotiv mit lasierenden und/oder voll deckenden Farben gedruckt sein.

Über der Druckschicht 8 kann noch eine Schutzschicht vorgesehen sein, die dann die äußerste Schicht des erfindungsgemäßen Verpackungsmaterials bildet und die Druckschicht 8 vor äußeren Einflüssen schützt. Sie ist wie die Vorlack-Schicht 5 wieder vollständig oder teilweise lichtdurchlässig. In Fig. 1 ist sie nicht dargestellt.

Im Folgenden wird ein Lichteinfall auf das Verpackungsmaterial im Bereich einer transparenten Stelle der Druckschicht 8 und der Aussparung 7 beschrieben. Dies ist auch durch den Laufpfeil 9 in Figur 1 beispielhaft veranschaulicht, der den Gang eines Lichtstrahls zeigt. Der Lichtstrahl 9 durchdringt zuerst - wenn vorhanden - die äußere Schutzschicht und dann die Druckschicht 8. Er gelangt dann über die Aussparung 7 und die Vorlack-Schicht 5 zu der reflektierenden Aluminiumfolie 1, von wo der Lichtstrahl 9 entsprechend reflektiert werden kann. Hierdurch entsteht ein Glanz-Effekt. Trifft ein Lichtstrahl dagegen auf die matte Deckschicht 6, so wird dieser absorbiert. Eine Reflexion von Licht findet an der matten Deckschicht 6 nicht statt. Es liegt ein Matt-Effekt vor.

Anstelle der Aluminiumfolie 1 kann auch ein Verbundmaterial eingesetzt werden, das beispielsweise eine Kunststoffschicht und/oder eine Aluminiumschicht umfasst. Es können aber auch metallisierte Kunststofffolien oder Verbundmaterialen aus metallisierten Kunststofffolien Anwendung finden. Es ist außerdem möglich, auf eine insbesondere transparente Kunststofffolie eine metallisch wirkende Farbe aufzubringen, die dann für die LichtReflexion sorgt. Wichtig ist, dass ein von außen kommender Lichtstrahl von der Trägerschicht reflektiert werden kann.

Im Folgenden wird unter Bezugnahme auf Fig. 2 eine konkrete Anwendung des erfindungsgemäßen Verpackungsmaterials beschrieben. Das Verpackungsmaterial ist für einen Joghurt-Becher vorgesehen und weist eine entsprechende Form auf. Die Druckschicht weist zwei kreisförmige Druckmotive 10, 11 auf. Um das linke Druckmotiv 10 läuft quasi die Aussparung 7, die hier kreisringförmig ausgebildet ist. Das Druckmotiv 10 ist mit lasierenden und/oder mit voll deckenden Farben gedruckt, während das Druckbild im Bereich der kreisringförmigen Aussparung 7 zumindest teil-transparent ist. Es ist aber auch denkbar, dass die Aussparung ebenfalls kreisförmig ausgebildet ist und radial über das Druckmotiv ragt. An den Stellen, wo ein Glanz-Effekt auftreten soll, ist das Druckmotiv dann transparent. Wo dagegen ein Matt-Effekt gewünscht ist, ist das Druckmotiv lichtundurchlässig. Es wird hier die Kontur des Druckmotivs hervorgehoben.

Unter dem rechten Druckmotiv 11 befinden sich sechs runde Aussparungen 7, die alle kleiner als das Druckmotiv 11 sind. Im Bereich dieser ist das Druckmotiv 11 wieder lichtdurchlässig, während es ansonsten lichtundurchlässig sein kann. Der Glanz-Effekt tritt im Druckmotiv 11 auf.

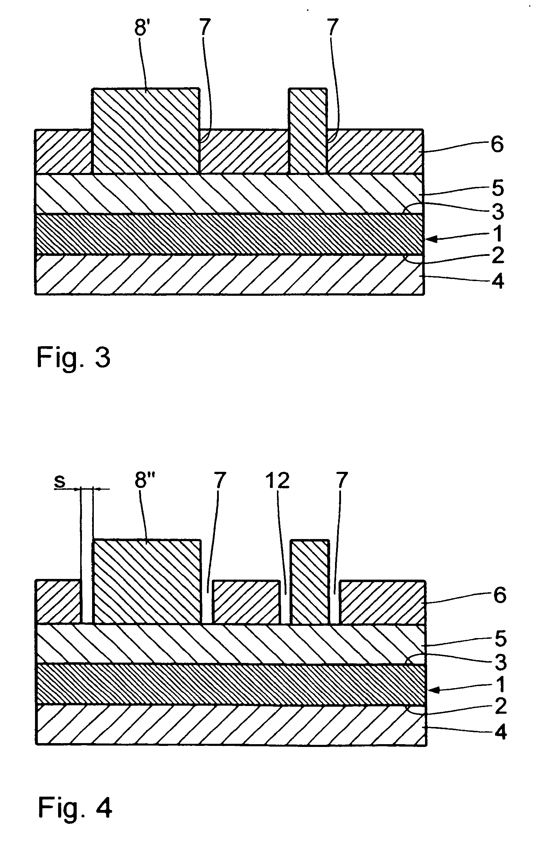

Im Folgenden wird unter Bezugnahme auf Figur 3 eine weitere Ausführungsform der Erfindung beschrieben. Identische Komponenten erhalten dieselben Bezugszeichen wie bei dem vorherigen Ausführungsbeispiel, auf dessen Beschreibung hiermit verwiesen wird. Konstruktiv unterschiedliche, jedoch funktionell gleichartige Komponenten erhalten dieselben Bezugszeichen mit einem hochgesetzten Strich.

Im Gegensatz zu dem vorherigen Ausführungsbeispiel ist die Druckschicht 8' flächenmäßig auf den Bereich der Aussparungen 7 begrenzt. Die Druckschicht 8' füllt auch hier wieder die Aussparungen 7 sowohl in der Höhe als auch in der Fläche vollständig aus. Die Druckschicht 8' steht aber gegenüber der matten Deckschicht 6 vor. Sie wird hier durch mehrere einzelne Druckschicht-Abschnitte gebildet, die voneinander getrennt sein können. Die Form der Druckschicht-Abschnitte entspricht im wesentlichen der Form der Aussparungen 7. Es ist aber auch denkbar, dass die Druckschicht 8' und die matte Deckschicht 6 die gleiche Höhe aufweisen und somit bündig miteinander abschließen. Die Deckschicht kann auch gegenüber der Druckschicht vorstehen.

Im Folgenden wird unter Bezugnahme auf Fig. 4 eine weitere Ausführungsform der Erfindung beschrieben. Identische Komponenten erhalten wieder dieselben Bezugszeichen wie bei den vorherigen Ausführungsbeispielen, auf deren Beschreibung hiermit verwiesen wird. Konstruktiv unterschiedliche, jedoch funktionell gleichartige Komponenten erhalten dieselben Bezugszeichen mit zwei hochgesetzten Strichen.

Auch hier ist die Druckschicht 8" wieder durch einzelne Druckschicht-Abschnitte gebildet, die getrennt voneinander sein können. Im Gegensatz zu dem Ausführungsbeispiel gemäß Fig. 3 stehen die matte Deckschicht 6 und die Druckschicht 8" nicht in Kontakt miteinander, d. h. sie sind voneinander getrennt. Dies wird dadurch erreicht, dass zwischen den Druckschicht-Abschnitten und der matten Deckschicht 6 ein Seiten-Abstand s vorliegt. Die Deckschicht 6 und die Druckschicht 8" können aber auch an einigen Stellen aneinander angrenzen. Die Druckschicht 8" füllt die Aussparungen 7 flächenmäßig also nicht vollständig aus. Die Aussparungen 7 sind somit lediglich teilweise flächenmäßig ausgefüllt. Durch diese Ausgestaltung wird der Brillant-Effekt noch verstärkt. Im Bereich des freien Zwischenraums 12 gelangt ein Lichtstrahl ungestört zu der Aluminiumfolie 1, von welcher er wieder reflektiert wird. Die Druckschicht 8" kann gegenüber der matten Deckschicht 6 erhöht sein. Sie kann aber auch bündig mit dieser abschließen oder dünner ausgebildet sein.

Durch die Ausgestaltung des erfindungsgemäßen Verpackungsmaterials können Druckmotive erzeugt werden, die je nach Einfall des Lichtstrahls richtig aus dem Druckbild "hervorleuchten". Dies ist auf den silbrig glänzenden Brillant-Effekt der Aluminiumfolie zurückzuführen. Dieser Effekt läßt sich durch den Glanzgrad der Aluminiumfolie beeinflussen. Analoges gilt für andere Trägerschicht-Materialien. Beispielsweise können die Vorlack-Schicht, die matte Deckschicht und die Druckschicht auch auf die Glanzseite der Aluminiumfolie aufgebracht werden. Aber auch durch den Deckungsgrad der Druckfarbe kann natürlich der Glanz-Effekt verändert werden. Eine Beeinflussung ist auch durch die Vorlack-Schicht möglich. Diese kann beispielsweise trüb oder klar sein.

Vorteilhafterweise ist die Trägerschicht ungeprägt. Der Glanz-/Matt-Effekt tritt aber auch auf, wenn die Trägerschicht feine Prägungen aufweist. Durch diese Prägungen entstehen äußerst interessante Licht-Effekte.

## Patentansprüche

1. Verpackungsmaterial in Form eines Folienzuschnitts, insbesondere Abdeckung für einen Behälter aus Kunststoff und/oder Folie,
- mit einer Trägerschicht (1), die eine nach innen gewandte und eine nach außen gewandte Stirnfläche (2, 3) aufweist, wobei die Trägerschicht (1) zumindest im Bereich der nach außen gewandten Stirnfläche (3) metallisch reflektierend ist,
- mit einer matten Deckschicht (6), die über der nach außen gewandten Stirnfläche (3) der Trägerschicht (1) liegt und mindestens eine Aussparung (7) zum Licht-Durchlass aufweist, und
- mit einer Druckschicht (8; 8'; 8"), die die mindestens eine Aussparung (7) zumindest teilweise ausfüllt und zumindest im Bereich der mindestens einen Aussparung (7) zumindest stellenweise transparent ist, so dass auf die Druckschicht (8; 8'; 8") einfallendes Licht von der Trägerschicht (1) reflektiert werden kann.

2. Verpackungsmaterial nach Anspruch 1, **dadurch gekennzeichnet, dass** die Trägerschicht (1) aus Aluminium besteht.

3. Verpackungsmaterial nach Anspruch 1, **dadurch gekennzeichnet, dass** die Trägerschicht (1) ein Verbundmaterial mit einer metallischen Oberschicht ist.

4. Verpackungsmaterial nach Anspruch 3, **dadurch gekennzeichnet, dass** das Verbundmaterial metallisierte Kunststofffolien umfasst.

5. Verpackungsmaterial nach Anspruch 1, **dadurch gekennzeichnet, dass** zwischen der Trägerschicht (1) und der matten Deckschicht (6) eine Vorlack-Schicht (5) vorgesehen ist.

6. Verpackungsmaterial nach Anspruch 1, **dadurch gekennzeichnet, dass** die Druckschicht (8; 8') die mindestens eine Aussparung (7) flächenmäßig vollständig ausfüllt.

7. Verpackungsmaterial nach Anspruch 6, **dadurch gekennzeichnet, dass** die Druckschicht (8) auf die matte Deckschicht (6) aufgebracht ist.

8. Verpackungsmaterial nach Anspruch 1, **dadurch gekennzeichnet, dass** die Druckschicht (8'; 8") nur im Bereich der mindestens einen Aussparung (7) gebildet ist.

9. Verpackungsmaterial nach Anspruch 1, **dadurch gekennzeichnet, dass** zwischen der matten Deckschicht (6) und der Druckschicht (8") mindestens stellenweise ein freier Zwischenraum (12) vorliegt.

10. Verpackungsmaterial nach Anspruch 1, **dadurch gekennzeichnet, dass** die Druckschicht (8; 8'; 8 ") gegenüber der matten Deckschicht (6) vorsteht.

11. Verpackungsmaterial nach Anspruch 1, **dadurch gekennzeichnet, dass** die matte Deckschicht gegenüber der Druckschicht vorsteht.

12. Verpackungsmaterial nach Anspruch 1, **dadurch gekennzeichnet, dass** die matte Deckschicht und die Druckschicht eine identische Höhe aufweisen.

13. Verpackungsmaterial nach Anspruch 1, **dadurch gekennzeichnet, dass** die Druckschicht (8; 8'; 8") mindestens ein Druckmotiv (10, 11) aufweist.

14. Verpackungsmaterial nach Anspruch 13, **dadurch gekennzeichnet, dass** sich die mindestens eine Aussparung (7) der matten Deckschicht (6) im Bereich des mindestens einen Druckmotivs (10, 11) befindet.

15. Verpackungsmaterial nach Anspruch 13, **dadurch gekennzeichnet, dass** sich die mindestens eine Aussparung (7) der matten Deckschicht (6) direkt unter dem Druckmotiv (11) befindet.

16. Verpackungsmaterial nach Anspruch 13, **dadurch gekennzeichnet, dass** die mindestens eine Aussparung (7) der matten Deckschicht (6) mindestens teilweise das Druckmotiv (10) umläuft.

17. Verpackungsmaterial nach Anspruch 1, **dadurch gekennzeichnet, dass** die matte Deckschicht (6) aus mattem Deckweiß besteht.

## Claims

1. Packaging material in the form of a blank, in particular a cover for a container made of plastics material and/or film,
- with a carrier layer (1) having an inwardly turned and an outwardly turned end face (2, 3), wherein the carrier layer (1) is metallically reflective at least in the region of the outwardly turned end face (3),
- with a mat outer layer (6) which is located above the outwardly turned end face (3) of the carrier layer (1) and has at least one recess (7) for the passage of light, and
- with a printed layer (8; 8'; 8") which at least partially fills the at least one recess (7) and is transparent, at least in certain areas, at least in the region of the at least one recess (7), thus allowing light striking the printed layer (8; 8'; 8") to be reflected by the carrier layer (1).

2. Packaging material according to claim 1, **characterised in that** the carrier layer (1) consists of aluminium.

3. Packaging material according to claim 1, **characterised in that** the carrier layer (1) is a composite material having a metallic top layer.

4. Packaging material according to claim 3, **characterised in that** the composite material comprises metal-coated plastics material films.

5. Packaging material according to claim 1, **characterised in that** an undercoat layer (5) is provided between the carrier layer (1) and the mat outer layer (6).

6. Packaging material according to claim 1, **characterised in that** the printed layer (8; 8') fills the entire surface area of the at least one recess (7).

7. Packaging material according to claim 6, **characterised in that** the printed layer (8) is attached to the mat outer layer (6).

8. Packaging material according to claim 1, **characterised in that** the printed layer (8'; 8") is formed only in the region of the at least one recess (7).

9. Packaging material according to claim 1, **characterised in that** a free interval (12) is present between the mat outer layer (6) and the printed layer (8"), at least in certain areas.

10. Packaging material according to claim 1, **characterised in that** the printed layer (8; 8'; 8") protrudes beyond the mat outer layer (6).

11. Packaging material according to claim 1, **characterised in that** the mat outer layer protrudes beyond the printed layer.

12. Packaging material according to claim 1, **characterised in that** the mat outer layer and the printed layer have an identical height.

13. Packaging material according to claim 1, **characterised in that** the printed layer (8; 8'; 8") has at least one printed motif (10, 11).

14. Packaging material according to claim 13, **characterised in that** the at least one recess (7) in the mat outer layer (6) is located in the region of the at least one printed motif (10, 11).

15. Packaging material according to claim 13, **characterised in that** the at least one recess (7) in the mat outer layer (6) is located directly below the printed motif (11).

16. Packaging material according to claim 13, **characterised in that** the at least one recess (7) in the mat outer layer (6) at least partially encircles the printed motif (10).

17. Packaging material according to claim 1, **characterised in that** the mat outer layer (6) consists of mat zinc white.

## Revendications

1. Matériel d'emballage sous forme d'une découpe de feuille, plus particulièrement un couvercle pour un récipient en plastique et/ou papier,
- avec un substrat (1), présentant une face terminale (2, 3) orientée vers l'intérieur et une orientée vers l'extérieur, où le substrat (1), au moins au niveau de la face terminale orientée vers l'extérieur (3), est métallique réfléchissant,
- avec une couche de revêtement matte (6) qui est couchée sur la face terminale orientée vers l'extérieur (3) du substrat (1) et présente au moins un blocage (7) au passage de la lumière, et
- avec une couche d'impression (8 ; 8' ; 8") qui comble du moins partiellement au moins un blocage (7) et est, du moins partiellement, transparente, du moins au niveau d'au moins un blocage (7), de sorte que la lumière tombant sur la couche d'impression (8 ; 8' ; 8") puisse être réfléchie par le substrat (1).

2. Matériel d'emballage selon la revendication 1, **caractérisé en ce que** le substrat (1) est en aluminium.

3. Matériel d'emballage selon la revendication 1, **caractérisé en ce que** le substrat (1) est un composite avec une couche supérieure métallique.

4. Matériel d'emballage selon la revendication 3, **caractérisé en ce que** le composite comporte des feuilles plastique métallisées.

5. Matériel d'emballage selon la revendication 1, **caractérisé en ce qu'une** couche de prélaque (5) est prévue entre le substrat (1) et la couche de revêtement mate (6).

6. Matériel d'emballage selon la revendication 1, **caractérisé en ce que** la couche d'impression (8 ; 8') comble la totalité de la surface d'au moins un blocage (7).

7. Matériel d'emballage selon la revendication 6, **caractérisé en ce que** la couche d'impression (8) est appliquée sur la couche de revêtement mate (6).

8. Matériel d'emballage selon la revendication 1, **caractérisé en ce que** la couche d'impression (8 ; 8') est présente seulement au niveau d'au moins un blocage.

9. Matériel d'emballage selon la revendication 1, **caractérisé en ce qu'**il y a un espace libre (12) au moins partiellement entre la couche de revêtement mate (6) et la couche d'impression (8")

10. Matériel d'emballage selon la revendication 1, **caractérisé en ce que** la couche d'impression (8 ; 8' ; 8'') se trouve face à la couche de revêtement mate (6).

11. Matériel d'emballage selon la revendication 1, **caractérisé en ce que** la couche de revêtement mate se trouve face à la couche d'impression.

12. Matériel d'emballage selon la revendication 1, **caractérisé en ce que** la couche de revêtement mate et la couche d'impression présentent une hauteur identique.

13. Matériel d'emballage selon la revendication 1, **caractérisé en ce que** la couche d'impression (8 ; 8' ; 8") présente au moins un motif d'impression (10, 11).

14. Matériel d'emballage selon la revendication 13, **caractérisé en ce que** au moins un blocage (7) de la couche de revêtement mate (6) se trouve au niveau d'au moins un motif d'impression (10, 11).

15. Matériel d'emballage selon la revendication 13, **caractérisé en ce que** au moins un blocage (7) de la couche de revêtement mate (6) se trouve directement sous le motif d'impression (11).

16. Matériel d'emballage selon la revendication 13, **caractérisé en ce que** au moins un blocage (7) de la couche de revêtement mate (6) entoure le motif d'impression (10).

17. Matériel d'emballage selon la revendication 1, **caractérisé en ce que** la couche de revêtement mate (6) est en blanc couvrant mate.
